(19) Europäisches Patentamt
European Patent Office
Office européen des brevets

(11) **EP 1 576 270 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(21) Anmeldenummer: **03767429.8**

(22) Anmeldetag: **18.11.2003**

(51) Int Cl.:
*F02D 41/14* (2006.01)    *F01N 11/00* (2006.01)
*F02D 41/40* (2006.01)

(86) Internationale Anmeldenummer:
**PCT/DE2003/003809**

(87) Internationale Veröffentlichungsnummer:
**WO 2004/046528 (03.06.2004 Gazette 2004/23)**

(54) **PRÜFVERFAHREN FÜR EINEN ABGASKATALYSATOR UND EINE ENTSPRECHENDE PRÜFEINRICHTUNG**

METHOD FOR TESTING A CATALYTIC CONVERTER AND CORRESPONDING TESTING DEVICE

PROCEDE DE CONTROLE D'UN CONVERTISSEUR CATALYTIQUE ET DISPOSITIF DE CONTROLE CORRESPONDANT

(84) Benannte Vertragsstaaten:
**DE FR GB IT**

(30) Priorität: **21.11.2002 DE 10254477**

(43) Veröffentlichungstag der Anmeldung:
**21.09.2005 Patentblatt 2005/38**

(73) Patentinhaber: **SIEMENS AKTIENGESELLSCHAFT**
**80333 München (DE)**

(72) Erfinder: **RABL, Hans-Peter**
**93309 Kelheim (DE)**

(56) Entgegenhaltungen:
**DE-A- 3 516 981        DE-A- 4 100 397**
**US-B1- 6 354 269**

EP 1 576 270 B1

**Beschreibung**

Die Erfindung betrifft ein Prüfverfahren für einen Abgaskatalysator gemäß Anspruch 1 sowie eine Prüfeinrichtung gemäß Anspruch 7.

Bei einem bekannten Prüfverfahren für einen Abgaskatalysator einer Brennkraftmaschine wird während des späten Expansionstakts der Brennkraftmaschine Kraftstoff eingespritzt, wobei der Kraftstoff aufgrund des späten Einspritzzeitpunkts unverbrannt in den Abgaskatalysator gelangt und dort in einer exothermen chemisch-katalytischen Reaktion teilweise abgebaut wird. Diese Reaktion führt zu einer Erwärmung des Abgaskatalysators, wobei die freigesetzte Wärmemenge die Funktionsfähigkeit des Abgaskatalysators widerspiegelt. Bei dem bekannten Prüfverfahren wird deshalb durch einen separaten Temperatursensor die Katalysatortemperatur gemessen, um daraus die Funktionsfähigkeit des Abgaskatalysators zu bestimmen.

Nachteilig an diesem bekannten Prüfverfahren ist zunächst die Tatsache, dass ein separater Temperatursensor zur Messung der Katalysatortemperatur erforderlich ist.

Ein weiterer Nachteil des bekannten Prüfverfahrens resultiert aus der thermischen Trägheit des Abgaskatalysators. So nimmt die Katalysatortemperatur bei dem bekannten Prüfverfahren aufgrund der Wärmekapazität des Abgaskatalysators nur allmählich zu, so dass eine aussagekräftige Messung der Katalysatortemperatur erst nach einer Verzögerungszeit von bis zu 30 Sekunden möglich ist. Während dieser Verzögerungszeit ist eine zusätzliche Kraftstoffeinspritzung während des Ausschiebetakts der Brennkraftmaschine erforderlich, wodurch der mittlere Kraftstoffverbrauch im MVEG-Testzyklus um bis zu 1% erhöht wird.

Ein ähnliches Prüfverfahren für einen Abgaskatalysator einer Brennkraftmaschine ist auch aus DE 41 00 397 C2 bekannt. Hierbei wird während des Schubbetriebs der Brennkraftmaschine Kraftstoff eingespritzt, der unverbrannt in den Abgaskatalysator gelangt und dort zu einer entsprechenden Erwärmung führt, wobei die Erwärmung des Abgaskatalysators die Funktionsfähigkeit des Abgaskatalysators wiedergibt und deshalb von einem Temperatursensor gemessen wird.

Nachteilig an diesem bekannten Prüfverfahren ist also ebenfalls die Tatsache, dass ein separater Temperatursensor zur Messung der Katalysatortemperatur erforderlich ist.

Ferner ist aus DE 43 02 779 C2 ein Prüfverfahren zu einem Abgaskatalysator bekannt, bei dem ebenfalls während des Schubbetriebs eine Kraftstoffeinspritzung erfolgt, so dass unverbranntes Kraftstoff/Luft-Gemisch in den Abgaskatalysator gelangt. Die Funktionsfähigkeit des Abgaskatalysators wird hierbei wahlweise durch eine Messung der Temperaturerhöhung oder durch eine Messung der Sauerstoffkonzentration mittels einer λ-Sonde bestimmt.

Auch bei diesem Prüfverfahren wird also zur Bestimmung der Funktionsfähigkeit des Abgaskatalysators ein separater Sensor benötigt.

Der Erfindung liegt also die Aufgabe zugrunde, die Funktionsfähigkeit eines Abgaskatalysators ohne einen separaten Temperatursensor zu ermitteln, ohne den Kraftstoffverbrauch wesentlich zu erhöhen.

Diese Aufgabe wird durch ein Prüfverfahren gemäß Anspruch 1 und durch eine Prüfeinrichtung gemäß Anspruch 7 gelöst.

Die Erfindung umfasst die allgemeine technische Lehre, die Funktionsfähigkeit des Abgaskatalysators außerhalb des normalen Betriebs der Brennkraftmaschine in einem Diagnose- oder Prüfbetrieb zu ermitteln.

Dabei erfolgt eine Testeinspritzung von Kraftstoff während des Expansionstaktes und/oder während des Ausschiebetakts der Brennkraftmaschine, so dass der eingespritzte Kraftstoff unverbrannt in den Abgaskatalysator gelangt. Bei einer Testeinspritzung während des Expansionstaktes der Brennkraftmaschine erfolgt die Testeinspritzung vorzugsweise bei einem Kurbelwellenwinkel im Bereich von 90° bis 180° nach dem oberen Totpunkt (OT), um eine Verbrennung des eingespritzten Kraftstoffs zu vermeiden.

Hierbei wird ein Teil des unverbrannten Kraftstoffs entsprechend der Funktionsfähigkeit des Abgaskatalysators in dem Abgaskatalysator umgewandelt, während der restliche Teil des unverbrannten Kraftstoffs den Abgaskatalysator wieder verlässt. Die in dem Abgasstrom stromabwärts nach dem Abgaskatalysator enthaltene Kraftstoffmenge spiegelt also die Funktionsfähigkeit des Abgaskatalysators wieder.

Im Rahmen des erfindungsgemäßen Prüfverfahrens wird deshalb die Kraftstoffmenge ermittelt, die in dem Abgaskatalysator nicht umgewandelt wird und deshalb wieder aus dem Abgaskatalysator austritt.

In Abhängigkeit von dieser Kraftstoffmenge wird dann die Funktionsfähigkeit des Abgaskatalysators ermittelt. Eine geringe Menge von nicht konvertiertem Kraftstoff ist hierbei ein Zeichen für einen gut funktionierenden Abgaskatalysator mit einer hohen Konvertierungsrate, wohingegen eine große Menge an nicht konvertiertem und von dem Abgaskatalysator durchgelassenen Kraftstoff für einen schlecht funktionierenden Abgaskatalysator spricht.

Im Rahmen des erfindungsgemäßen Prüfverfahrens erfolgt vorzugsweise eine Abgasrückführung, um die Kraftstoffmenge zu ermitteln, die von dem Abgaskatalysator nicht konvertiert wurde. Hierbei wird aus dem Abgasstrom der Brennkraftmaschine stromabwärts nach dem Abgaskatalysator Abgas mit unverbranntem und nicht konvertiertem Kraftstoff entnommen und in den Ansaugtrakt der Brennkraftmaschine zurückgeführt. Diese Abgasrückführung von unverbranntem Kraftstoff verursacht durch die zusätzliche Kraftstoffzufuhr eine Leistungserhöhung der Brennkraftmaschine und ermöglicht so indirekt eine Bestimmung der von dem Abgaskatalysator durchgelassenen Kraftstoffmenge.

Zur Ermittlung der durch die Testeinspritzung hervorgerufenen Leistungserhöhung der Brennkraftmaschine wird vorzugsweise die Drehbeschleunigung der Kurbelwelle bestimmt, woraus das Drehmoment der Brennkraftmaschine abgeleitet werden kann.

Die Drehbeschleunigung der Kurbelwelle kann im Rahmen der Erfindung durch zweimalige zeitliche Ableitung der Kurbelwellendrehzahl ermittelt werden, wobei die Kurbelwellendrehzahl beispielsweise von einem Drehzahlsensor ermittelt werden kann.

Es ist jedoch alternativ auch möglich, dass ein Geschwindigkeitssensor vorgesehen ist, der die Drehgeschwindigkeit der Kurbelwelle misst. Die Drehbeschleunigung der Kurbelwelle ergibt sich dann durch einmalige zeitliche Ableitung der gemessenen Drehgeschwindigkeit.

Darüber hinaus kann die Drehbeschleunigung der Kurbelwelle auch direkt durch einen Beschleunigungssensor gemessen werden, so dass keine zeitliche Ableitung zur Bestimmung der Drehbeschleunigung erforderlich ist.

Schließlich besteht auch die Möglichkeit, die Drehbeschleunigung der Kurbelwelle aus anderen Betriebsgrößen der Brennkraftmaschine abzuleiten, wie beispielsweise aus der Drehzahl, der Drehgeschwindigkeit oder der Drehbeschleunigung der Nockenwelle oder einer anderen Welle, die mit der Kurbelwelle starr gekoppelt ist.

Die durch die Testeinspritzung hervorgerufene Leistungserhöhung der Brennkraftmaschine wird jedoch nicht nur durch die Menge des unverbrannten Kraftstoffs bestimmt, der den Abgaskatalysator verlässt, sondern auch durch die Abgasrückführrate. Falls beispielsweise nur ein geringer Anteil des Abgases mit dem unverbrannten Kraftstoff in den Ansaugtrakt der Brennkraftmaschine zurückgeführt wird, verursacht auch eine schlechte Konvertierungsrate des Abgaskatalysators mit einer entsprechend großen Menge unverbrannten Kraftstoffs im Abgasstrom nur eine geringe Leistungserhöhung der Brennkraftmaschine. Zur Berücksichtigung dieses Effekts wird deshalb vorzugsweise auch die Abgasrückführrate eingestellt oder ermittelt und bei der Bestimmung der Funktionsfähigkeit des Abgaskatalysators berücksichtigt.

Darüber hinaus ermöglicht das erfindungsgemäße Prüfverfahren auch eine Bestimmung der sogenannten Light-Off-Temperatur des Abgaskatalysators, also der Katalysatortemperatur, bei der dieser 50% seiner Nenn-Konvertierungsrate erreicht. Hierzu wird das vorstehend beschriebene Prüfverfahren bei verschiedenen Temperaturen durchgeführt, wobei jeweils die Konvertierungsrate des Abgaskatalysators ermittelt und mit der vorgegebenen Nenn-Konvertierungsrate verglichen wird. Beim Erreichen von rund 50% der Nenn-Konvertierungsrate wird der aktuelle Temperaturwert als Light-Off-Temperatur festgehalten und beispielsweise in der elektronischen Motorsteuerung abgespeichert.

Vorzugsweise erfolgt die Bestimmung der Light-Off-Temperatur des Abgaskatalysators bei einem Kaltstart der Brennkraftmaschine, wenn die Katalysatortemperatur von der relativ geringen Umgebungstemperatur ausgehend einen großen Temperaturbereich durchläuft.

Die hierbei erforderliche Bestimmung der jeweiligen Katalysatortemperatur kann beispielsweise durch einen Temperatursensor erfolgen, der die Katalysatortemperatur direkt misst.

Es ist jedoch alternativ auch möglich, dass die Katalysatortemperatur entsprechend einem vorgegebenen physikalischen Modell aus anderen bekannten Größen des Antriebssystems abgeleitet wird, so dass auf einen separaten Temperatursensor zur Messung der Katalysatortemperatur verzichtet werden kann.

Die Kenntnis der Light-Off-Temperatur ermöglicht im normalen Betrieb der Brennkraftmaschine die bedarfsgerechte Einleitung aktiver Katalysatorheizmaßnahmen, um den Abgaskatalysator möglichst schnell auf Betriebstemperatur zu bringen.

Darüber hinaus lassen sich aus der Light-Off-Temperatur des Abgaskatalysators Rückschlüsse auf den Alterungszustand und eine mögliche Schädigung des Abgaskatalysators ziehen, da sich die Light-Off-Temperatur eines Abgaskatalysators im Betrieb aufgrund von Alterungseffekten verschieben kann.

In einer Variante der Erfindung wird das erfindungsgemäße Prüfverfahren jeweils nur für einen Brennraum der Brennkraftmaschine durchgeführt, so dass störende Wechselwirkungen mit Abgasrückführungen von anderen Brennräumen ausgeschlossen sind.

Eine andere Variante der Erfindung sieht dagegen vor, dass die Testeinspritzung bei mehreren Brennräumen der Brennkraftmaschine erfolgt. Die Zuordnung einer Testeinspritzung in einem bestimmten Brennraum der Brennkraftmaschine zu der resultierenden Leistungserhöhung erfolgt dann unter Berücksichtigung der Laufzeit des Abgases in der Abgasrückführung. Damit können innerhalb weniger Kurbelwellenumdrehungen alle Abgaskatalysatoren der Brennkraftmaschine überprüft werden, die parallel geschaltet sind.

Das erfindungsgemäße Verfahren ist unter anderem bei Ottomotoren und Dieselmotoren anwendbar, jedoch ist die Erfindung nicht auf diese Typen von Brennkraftmaschinen beschränkt. Vorzugsweise wird das erfindungsgemäße Verfahren jedoch bei einem Common-Rail-Einspritzsystem eines Dieselmotors eingesetzt.

Schließlich umfasst die Erfindung auch eine entsprechende Prüfeinrichtung zur Durchführung des erfindungsgemäßen Prüfverfahrens.

Andere vorteilhafte Weiterbildungen der Erfindung sind in den Unteransprüchen enthalten oder werden nachstehend zusammen mit der Beschreibung des bevorzugten Ausführungsbeispiels der Erfindung anhand der Zeichnungen erläutert. Es zeigen:

Figur 1           ein Antriebssystem für ein Kraftfahrzeug mit einer Brennkraftmaschine und einem Abgaskatalysator,
Figur 2a und 2b   ein Prüfverfahren für den Abgaskatalysator in Figur 1 sowie
Figur 3           eine Variante des erfindungsgemäßen Prüfverfahrens zur Bestimmung der Light-Off-Temperatur des Abgaskatalysators

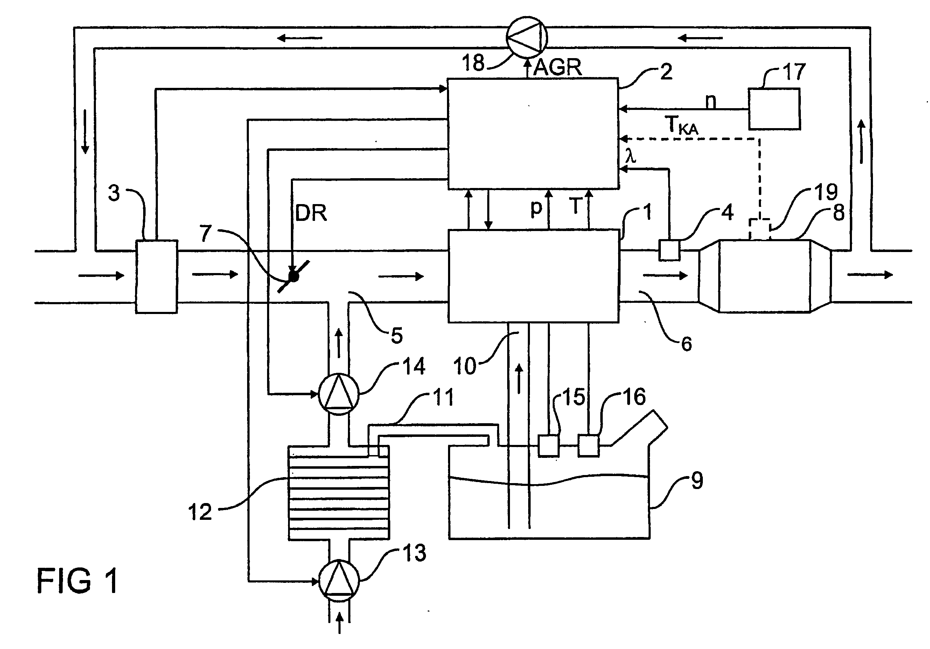

Die Darstellung in Figur 1 zeigt eine Brennkraftmaschine 1 mit einer Einspritzanlage, wobei die Brennkraftmaschine 1 in herkömmlicher Weise aufgebaut ist und deshalb nur schematisch dargestellt ist.

Die Brennkraftmaschine 1 wird durch eine elektronische Steuereinheit 2 angesteuert, wobei die Steuereinheit 2 beispielsweise den Einspritzzeitpunkt sowie die Einspritzdauer der Einspritzanlage vorgibt.

Als Eingangssignale wertet die Steuereinheit 2 die Messsignale eines Luftmassensensors 3 sowie einer Lambda-Sonde 4 aus, wobei der Luftmassensensor 3 in einem Ansaugtrakt 5 der Brennkraftmaschine 1 angeordnet ist, während sich die Lambda-Sonde 4 auf der Auslassseite der Brennkraftmaschine 1 in einem Abgaskanal 6 befindet.

Darüber hinaus ist in dem Ansaugtrakt 5 der Brennkraftmaschine 1 auch eine Drosselklappe 7 angeordnet, die den von der Brennkraftmaschine 1 angesaugten Luftmassenstrom steuert und von der Steuereinheit 2 eingestellt wird.

Ferner ist in dem Abgaskanal 6 ein Abgaskatalysator 8 angeordnet, der als herkömmlicher Drei-Wege-Katalysator ausgebildet ist.

Zur Kraftstoffversorgung ist ein Kraftstoffbehälter 9 vorgesehen, der mit der Brennkraftmaschine 1 über eine nur schematisch dargestellte Kraftstoffleitung 10 verbunden ist.

Darüber hinaus weist der Kraftstoffbehälter 9 eine Entlüftungsleitung 11 auf, die in einen Aktivkohlefilter 12 mündet, wobei der Aktivkohlefilter 12 den aus dem Kraftstoffbehälter 9 ausgasenden Kraftstoff zwischenspeichern kann. Hierdurch wird verhindert, dass ausgasender Kraftstoff aus dem Kraftstoffbehälter 9 austritt, was zu einer Umweltverschmutzung führen würde.

Der Aktivkohlefilter 12 hat jedoch nur eine begrenzte Speicherfähigkeit und muss deshalb gelegentlich mit Umgebungsluft gespült werden, um den gespeicherten Kraftstoff aus dem Aktivkohlefilter 12 auszuspülen. Der Aktivkohlefilter 12 ist deshalb über ein steuerbares Ventil 13 mit der Umgebung verbunden, wobei das Ventil 13 von der Steuereinheit 2 angesteuert wird. Darüber hinaus ist der Aktivkohlefilter 12 über ein steuerbares Ventil 14 mit dem Ansaugtrakt 5 der Brennkraftmaschine 1 verbunden.

Im geöffneten Zustand der Ventile 13 und 14 saugt die Brennkraftmaschine 1 also Umgebungsluft über den Aktivkohlefilter 12 an, wobei die in dem Aktivkohlefilter 12 gespeicherten Kraftstoffausgasungen ausgespült werden und dadurch das Gemisch in dem Ansaugtrakt 5 der Brennkraftmaschine 1 anfetten, was von der Lambda-Sonde 4 gemessen wird. Zum Spülen des Aktivkohlefilters 12 werden die beiden Ventile 13 und 14 also solange geöffnet, bis die Lambda-Sonde 4 keine Anfettung des Gemischs in dem Ansaugtrakt 5 mehr misst, da dann die gesamten Kraftstoffausgasungen aus dem Aktivkohlefilter 12 ausgespült sind und die Speicherfähigkeit des Aktivkohlefilters 12 somit wieder hergestellt ist.

Während der Spülung des Aktivkohlefilters 12 wird der Füllungsgrad der Brennkraftmaschine 1 durch die aus dem Aktivkohlefilter 12 ausgespülten Kraftstoffdämpfe erhöht, was mit einer Leistungssteigerung verbunden ist. Die Steuereinheit 2 kompensiert diesen störenden Einfluss der Regeneration des Aktivkohlefilters 12 jedoch durch eine Verstellung der Drosselklappe 7 und eine Änderung des Zündwinkels. Hierbei berücksichtigt die Steuereinheit 2 die von der Lambda-Sonde 4 gemessene Luftzahl $\lambda$, entsprechend einem vorgegebenen physikalischen Modell, in das auch die in einem Kennlinienglied gespeicherte Ventilkennlinie des Ventils 14 eingeht.

Darüber hinaus weist der Kraftstoffbehälter 9 einen Drucksensor 15 auf, der den Druck in dem Kraftstoffbehälter 9 misst und zur Auswertung des Messsignals mit der Steuereinheit 2 verbunden ist.

Ferner ist in dem Kraftstoffbehälter 9 noch ein Temperatursensor 16 angeordnet, der die Kraftstofftemperatur misst und an die Steuereinheit 2 weitergibt. Dies ermöglicht vorteilhaft eine Berücksichtigung der Kraftstofftemperatur bei der Bestimmung der Kraftstoffqualität aus dem Ausgasungsverhalten, wodurch temperaturbedingte Messfehler vermieden werden.

Außerdem weist das Antriebssystem einen Drehzahlsensor 17 auf, der die Drehzahl n der Kurbelwelle der Brennkraftmaschine 1 misst und an die Steuereinheit 2 weitergibt. Die Steuereinheit 2 berechnet dann aus der gemessenen Drehzahl n der Kurbelwelle durch zweimaliges zeitliches Differenzieren die Drehbeschleunigung a der Kurbelwelle.

Darüber hinaus weist das Antriebssystem eine Abgasrückführung auf, die stromabwärts nach dem Abgaskatalysator 8 Abgas entnimmt und über ein steuerbares Abgasrückführventil 18 in den Ansaugtrakt 5 der Brennkraftmaschine 1 stromaufwärts vor dem Luftmassensensor 3 zurückführt. Das Abgasrückführventil 18 wird hierbei von der Steuereinheit 2 angesteuert, was eine Einstellung der Abgasrückführrate AGR ermöglicht.

Die Steuereinheit 2 ermöglicht hierbei eine Bestimmung der Katalysatortemperatur $T_{Kat}$ entsprechend einem vorgegebenen physikalischen Modell aus bekannten Betriebsgrößen des Antriebssystems.

In einer alternativen Variante der Erfindung weist das Antriebssystem dagegen einen Temperatursensor 19 auf, der die Katalysatortemperatur $T_{Kat}$ direkt misst, was wesentlich genauer ist.

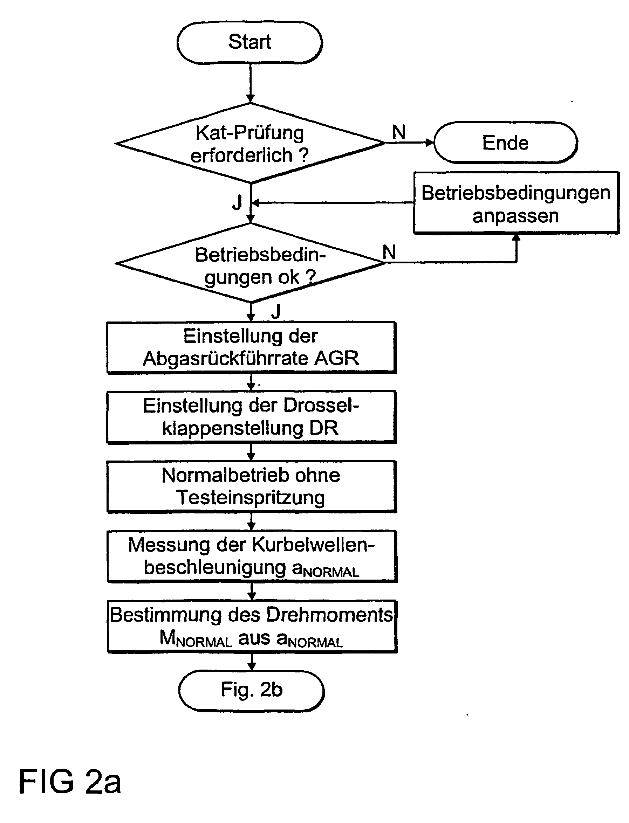

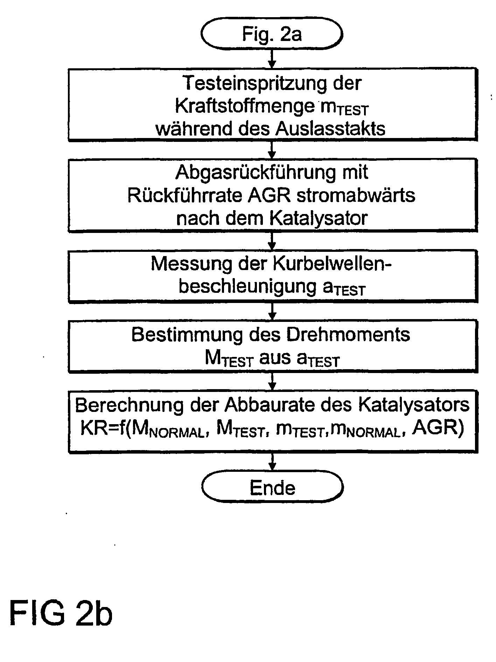

Im folgenden wird nun das erfindungsgemäße Prüfverfahren für den Abgaskatalysator 8 beschrieben, das in den Figuren 2a und 2b als Flussdiagramm dargestellt ist.

Zu Beginn des erfindungsgemäßen Prüfverfahren wird zunächst untersucht, ob eine Prüfung der Funktionsfähigkeit des Abgaskatalysators 8 erforderlich ist. Dies kann beispielsweise nach Ablauf bestimmter Zeitintervalle der Fall sein oder jeweils nach einer vorgegebenen Fahrtstrecke. Falls keine Prüfung des Abgaskatalysators 8 erforderlich ist, so wird das erfindungsgemäße Prüfverfahren beendet.

Andernfalls wird in einem nächsten Schritt geprüft, ob die Betriebsbedingungen für die Durchführung des erfindungsgemäßen Prüfverfahrens geeignet sind. So erfordert das erfindungsgemäße Prüfverfahren beispielsweise einen vorgegebenen Einspritzdruck.

Falls die Betriebsbedingungen ungeeignet sind, so erfolgt in einem weiteren Schritt eine Anpassung der Betriebsbedingungen, bis schließlich Betriebsbedingungen vorliegen, die für das erfindungsgemäße Prüfverfahren geeignet sind.

In einem nächsten Schritt wird dann die Abgasrückführrate AGR auf einen vorgegebenen Wert von beispielsweise 50% eingestellt, indem die Steuereinheit 2 das Abgasrückführventil 18 entsprechend ansteuert. Eine Abgasrückführrate AGR von 50% bedeutet, dass der prozentuale volumetrische Anteil des Abgases im Frischgemisch gleich 50 ist.

Weiterhin wird dann eine vorgegebene Drosselklappenstellung DR eingestellt, indem die Steuereinheit 2 die Drosselklappe 7 entsprechend ansteuert.

Anschließend erfolgt dann ein normaler Einspritzbetrieb der Brennkraftmaschine 1, wobei jeweils eine vorgegebene Kraftstoffmenge $m_{NORMAL}$ eingespritzt wird.

Dabei wird aus der gemessenen Drehzahl n der Kurbelwelle die Kurbelwellenbeschleunigung $a_{NORMAL}$ abgeleitet wird.

Aus der Kurbelwellenbeschleunigung $a_{NORMAL}$ wird dann das Drehmoment $M_{NORMAL}$ berechnet, das im normalen Einspritzbetrieb aufgebracht wird und auf die Kurbelwelle der Brennkraftmaschine 1 wirkt.

In dem in Figur 2b dargestellten Verfahrensabschnitt erfolgt dann zusätzlich zu der normalen Einspritzung eine Testeinspritzung während des Auslasstaktes der Brennkraftmaschine 1.

Hierbei wird jeweils eine vorgegebene Kraftstoffmenge $m_{TEST}$ eingespritzt, die aufgrund des sehr späten Einspritzzeitpunkts unverbrannt in den Abgaskatalysator 8 gelangt und dort mit einer Konvertierungsrate KR teilweise abgebaut wird. Ein Teil $KR \cdot m_{TEST}$ des eingespritzten Kraftstoffs wird also in dem Abgaskatalysator 8 konvertiert, während der andere Teil $(1-KR) \cdot m_{TEST}$ den Abgaskatalysator 8 durchläuft, so dass der Abgasstrom stromabwärts nach dem Abgaskatalysator 8 noch unverbrannten Kraftstoff enthält.

Durch die Abgasrückführung wird dann ein Teil $AGR \cdot (1-KR) \cdot m_{TEST}$ des unverbrannten Kraftstoffs in den Ansaugtrakt 5 der Brennkraftmaschine 1 stromaufwärts vor dem Luftmassensensor 3 zurückgeführt, so dass sich die gesamte Kraftstoffmenge $m_{GESAMT}$ wie folgt berechnet:

$$m_{GESAMT} = m_{NORMAL} + AGR \cdot (1 - KR) \cdot m_{TEST}$$

Die durch die Testeinspritzung in Verbindung mit der Abgasrückführung erhöhte Kraftstoffmenge $m_{GESAMT}$ führt zu einer entsprechenden Erhöhung der Motorleistung, was sich in einer entsprechend größeren Kurbelwellenbeschleunigung niederschlägt. Die Steuereinheit 2 leitet deshalb aus der von dem Drehzahlsensor 17 gemessenen Drehzahl der Kurbelwelle die Kurbelwellenbeschleunigung $a_{TEST}$ ab, die bei der Testeinspritzung auftritt.

Aus der Kurbelwellenbeschleunigung $a_{TEST}$ wird dann das entsprechende Drehmoment $M_{TEST}$ berechnet, das die Brennkraftmaschine 1 auf die Kurbelwelle aufbringt.

Die Konvertierungsrate KR des Abgaskatalysators 8 ergibt sich dann aus der Abgasrückführrate AGR, dem Drehmoment $M_{NORMAL}$ und der Einspritzmenge $m_{NORMAL}$ im Normalbetrieb sowie dem Drehmoment $M_{TEST}$ und der zusätzlichen Einspritzmenge $m_{TEST}$ im Prüfbetrieb nach folgender Formel:

$$KR = 1 - \left( \frac{M_{TEST}}{M_{NORMAL}} - 1 \right) \cdot \frac{1}{AGR} \cdot \frac{m_{NORMAL}}{m_{TEST}} \ .$$

Bei einer normalen Einspritzmenge $m_{NORMAL}$=4 mg/Hub, einer Nacheinspritzmenge $m_{TEST}$=4 mg/Hub, einer Abgasrückführrate AGR=0,5 und einer Drehmomenterhöhung im Prüfbetrieb von 20% entsprechend $M_{TEST}/M_{NORMAL}$=1,2 ergibt sich also eine Konvertierungsrate KR=0,6 des Abgaskatalysators 8.

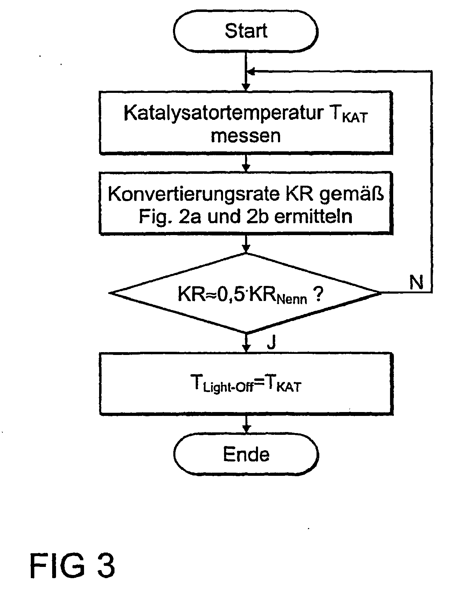

Schließlich zeigt das Flussdiagramm in Figur 3 eine Variante des erfindungsgemäßen Prüfverfahrens, bei dem die sogenannte Light-Off-Temperatur $T_{Light-Off}$ des Abgaskatalysators ermittelt wird. Dies ist die Katalysatortemperatur, bei der die Konvertierungsrate KR des Abgaskatalysators 8 50% der Nenn-Konvertierungsrate $KR_{NENN}$ erreicht hat.

Hierzu wird bei einem Kaltstart in regelmäßigen Abständen die Katalysatortemperatur $T_{Kat}$ gemessen, wobei jeweils die Konvertierungsrate KR entsprechend dem vorstehend beschriebenen Prüfverfahren ermittelt wird.

Die Konvertierungsrate KR wird dann mit einem vorgegebenen Nennwert $KR_{Nenn}$ der Konvertierungsrate verglichen, um die Light-Off-Temperatur $T_{Light-Off}$ des Abgaskatalysators zu bestimmen. Beim Erreichen von 50% des vorgegebenen Nennwerts $KR_{Nenn}$ wird die aktuelle Katalysatortemperatur $T_{Kat}$ als Light-Off-Temperatur $T_{Light-Off}$ in der Steuereinheit 2 abgespeichert.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen

## Patentansprüche

1.  Prüfverfahren für einen Abgaskatalysator (8) einer Brennkraftmaschine (1) mit den folgenden Schritten:

    - Testeinspritzung von Kraftstoff während des Expansionstakts und/oder während des Auslasstakts der Brennkraftmaschine (1),
    - Konvertierung mindestens eines Teils des im Abgas der Brennkraftmaschine (1) enthaltenen unverbrannten Kraftstoffs in dem Abgaskatalysator (8),
    - Abgasrückführung von stromabwärts nach dem Abgaskatalysator (8) entnommenem Abgas mit dem nicht konvertierten Kraftstoff der Testeinspritzung in einen Ansaugtrakt (5) der Brennkraftmaschine (1),
    - Ermittlung der Leistungserhöhung der Brennkraftmaschine (1), die aus der Abgasrückführung des nicht konvertierten Kraftstoffs resultiert,
    - Bestimmung der in dem Abgaskatalysator (8) nicht konvertierten Kraftstoffmenge aus der Leistungserhöhung der Brennkraftmaschine (1),
    - Bestimmung der Funktionsfähigkeit des Abgaskatalysators (8) aus der nicht konvertierten Kraftstoffmenge.

2.  Prüfverfahren nach Anspruch 1,
    **gekennzeichnet durch**
    folgende Schritte

    - Ermittlung der Drehbeschleunigung ($a_{Normal}$, $a_{Test}$) der Brennkraftmaschine (1)
    - Bestimmung der aus der Testeinspritzung resultierenden Leistungserhöhung aus der Drehbeschleunigung ($a_{Normal}$, $a_{Test}$) der Brennkraftmaschine (1).

3.  Prüfverfahren nach mindestens einem der vorhergehenden Ansprüche,
    **dadurch gekennzeichnet, dass** bei der Testeinspritzung eine vorgegebene Kraftstoffmenge ($m_{TEST}$) eigespritzt wird und die Funktionsfähigkeit des Abgaskatalysators (8) in Abhängigkeit von der eingespritzten Kraftstoffmenge ($m_{TEST}$) bestimmt wird.

4.  Prüfverfahren nach mindestens einem der vorhergehenden Ansprüche,
    **dadurch gekennzeichnet,**
    **dass** die Abgasrückführrate (AGR) ermittelt wird und die Funktionsfähigkeit des Abgaskatalysators (8) in Abhängigkeit von der Abgasrückführrate (AGR) bestimmt wird.

5.  Prüfverfahren nach mindestens einem der vorhergehenden Ansprüche,
    **dadurch gekennzeichnet,**
    **dass** die Funktionsfähigkeit des Abgaskatalysators (8) bei verschiedenen Temperaturen ermittelt wird.

6.  Prüfverfahren nach mindestens einem der vorhergehenden Ansprüche,
    **dadurch gekennzeichnet,**
    **dass** die Temperatur ($T_{Light-Off}$) ermittelt wird, bei der die Abbaumenge des Abgaskatalysators (8) im wesentlichen einem vorgegebenen Grenzwert entspricht.

7.  Prüfeinrichtung für einen Abgaskatalysator (8) einer Brennkraftmaschine (1) mit
    einer Einspritzanlage zur Testeinspritzung einer vorgegebenen Kraftstoffmenge während eines Expansionstakts und/oder während eines Auslasstakts der Brennkraftmaschine (1),
einer Abgasrückführeinrichtung (18) zur Entnahme von Abgas aus dem Abgasstrom der Brennkraftmaschine (1) stromabwärts nach dem Abgaskatalysator (8) und zur Rückführung des entnommenem Abgases in einen stromaufwärts vor der Brennkraftmaschine (1) befindlichen Ansaugtrakt (5),einer Messeinrichtung (17) zur Erfassung der durch die Testeinspritzung verursachten Leistungserhöhung der Brennkraftmaschine (1),
einer Auswertungseinheit (2) zur Bestimmung der Funktionsfähigkeit des Abgaskatalysators (8) in Abhängigkeit von der eingespritzten Kraftstoffmenge ($m_{Test}$) und der resultierenden Leistungserhöhung.

**8.** Prüfeinrichtung nach Anspruch 7,
**dadurch gekennzeichnet,**
**dass** zur Messung der Temperatur des Abgaskatalysators (8) ein mit der Auswertungseinheit (2) verbundener Temperatursensor (19) vorgesehen ist.

**9.** Prüfeinrichtung nach Anspruch 7 und/oder Anspruch 8,
**dadurch gekennzeichnet,**
**dass** die Messeinrichtung zur Ermittlung der Leistungserhöhung der Brennkraftmaschine (1) einen Drehzahlsensor (2) aufweist.

**Claims**

**1.** A test method for an exhaust gas catalytic converter (8) of an internal combustion engine (1) comprising the following steps:

- Test injection of fuel during the expansion stroke and/or during the exhaust stroke of the internal combustion engine (1),
- Conversion in the exhaust gas catalytic converter (8) of at least a part of the unburned fuel contained in the exhaust gas of the internal combustion engine (1),
- Exhaust gas recirculation of exhaust gas removed downstream of the exhaust gas catalytic converter (8), together with the unconverted fuel from the test injection, into an intake manifold (5) of the internal combustion engine (1),
- Determination of the increase in power of the internal combustion engine (1), which increase results from the exhaust gas recirculation of the unconverted fuel,
- Determination of the quantity of unconverted fuel in the exhaust gas catalytic converter (8) from the increase in power of the internal combustion engine (1),
- Determination of the operating capacity of the exhaust gas catalytic converter (8) from the quantity of unconverted fuel.

**2.** A test method according to claim 1,
**characterised by**
the following steps

- Determination of the angular acceleration ($a_{Normal}$, $a_{Test}$) of the internal combustion engine (1)
- Determination from the angular acceleration ($a_{Normal}$, $a_{Test}$) of the internal combustion engine (1) of the increase in power resulting from the test injection.

**3.** A test method according to at least one of the preceding claims,
**characterised in that** in the test injection a predetermined quantity of fuel ($m_{TEST}$) is injected and the operating capacity of the exhaust gas catalytic converter (8) dependent on the quantity of fuel injected ($m_{TEST}$) is determined.

**4.** A test method according to at least one of the preceding claims,
**characterised in that**
the exhaust gas recirculation rate (EGR) is determined and the operating capacity of the exhaust gas catalytic converter (8) dependent on the exhaust gas recirculation rate (EGR) is determined.

**5.** A test method according to at least one of the preceding claims,
**characterised in that**
the operating capacity of the exhaust gas catalytic converter (8) at various temperatures is determined.

6. A test method according to at least one of the preceding claims,
**characterised in that**
the temperature ($T_{Light-Off}$) at which the conversion quantity of the exhaust gas catalytic converter (8) essentially corresponds to a predetermined threshold value is determined.

7. A testing device for an exhaust gas catalytic converter (8) of an internal combustion engine (1) comprising
an injection system for the test injection of a predetermined quantity of fuel during an expansion stroke and/or during an exhaust stroke of the internal combustion engine (1),
an exhaust gas recirculation device (18) for removing exhaust gas from the exhaust gas flow of the internal combustion engine (1) downstream of the exhaust gas catalytic converter (8) and for recirculating the removed exhaust gas into an intake manifold (5) located upstream of the internal combustion engine (1),
a measuring device (17) for recording the increase in power of the internal combustion engine (1) caused by the test injection,
an evaluation unit (2) for determining the operating capacity of the exhaust gas catalytic converter (8) dependent on the quantity of fuel injected ($m_{Test}$) and the resulting increase in power.

8. A testing device according to claim 7,
**characterised in that**
a temperature sensor (19) connected to the evaluation unit (2) is provided for measuring the temperature of the exhaust gas catalytic converter (8).

9. A testing device according to claim 7 and/or claim 8,
**characterised in that**
the measuring device for determining the increase in power of the internal combustion engine (1) has a rotational speed sensor (2).

**Revendications**

1. Procédé de contrôle pour un catalyseur de gaz d'échappement (8) d'un moteur à combustion interne (1) comprenant les étapes suivantes :

   - injection test de carburant pendant une phase de détente et/ou pendant une phase d'échappement du moteur à combustion interne (1),
   - conversion dans le catalyseur de gaz d'échappement (8) d'au moins une partie du carburant imbrûlé contenu dans les gaz d'échappement du moteur à combustion interne (1),
   - recyclage des gaz d'échappement prélevés en aval du catalyseur de gaz d'échappement (8) avec le carburant non converti de l'injection test dans une ligne d'aspiration (5) du moteur à combustion interne (1),
   - détection de l'augmentation du rendement du moteur à combustion interne (1) qui résulte du recyclage des gaz d'échappement du carburant non converti,
   - détermination de la quantité de carburant non converti dans le catalyseur de gaz d'échappement (8) à partir de l'augmentation du rendement du moteur à combustion interne (1),
   - détermination de la capacité de fonctionnement du catalyseur de gaz d'échappement (8) à partir de la quantité de carburant non converti.

2. Procédé de contrôle selon la revendication 1,
**caractérisé par** les étapes suivantes

   - détection de l'accélération de rotation ($a_{normal}$, $a_{test}$) du moteur à combustion interne (1),
   - détermination de l'augmentation du rendement résultant de l'injection test à partir de l'accélération de rotation ($a_{normal}$, $a_{test}$) du moteur à combustion interne (1) .

3. Procédé de contrôle selon au moins l'une quelconque des revendications précédentes,
**caractérisé en ce qu'**une quantité de carburant prédéterminée ($m_{TEST}$) est injectée lors de l'injection test et la capacité de fonctionnement du catalyseur de gaz d'échappement (8) est déterminée à partir de la quantité de carburant injectée ($m_{TEST}$) .

4. Procédé de contrôle selon au moins l'une quelconque des revendications précédentes,

**caractérisé en ce que** le taux de recyclage des gaz d'échappement (AGR) est détecté et la capacité de fonctionnement du catalyseur de gaz d'échappement (8) est déterminée en fonction de du taux de recyclage des gaz d'échappement (AGR) .

5. Procédé de contrôle selon au moins l'une quelconque des revendications précédentes,
   **caractérisé en ce que** la capacité de fonctionnement du catalyseur de gaz d'échappement (8) est détectée à différentes températures.

6. Procédé de contrôle selon au moins l'une quelconque des revendications précédentes,
   **caractérisé en ce que** l'on détermine la température ($T_{Light-off}$) à laquelle la quantité de dégradation du catalyseur de gaz d'échappement (8) correspond sensiblement à une valeur limite prédéterminée.

7. Dispositif de contrôle pour un catalyseur de gaz d'échappement (8) d'un moteur à combustion interne (1) comprenant un dispositif d'injection pour l'injection test d'une quantité prédéterminée de carburant pendant une phase de détente et/ou pendant une phase d'échappement du moteur à combustion interne (1),
   un dispositif de recyclage des gaz d'échappement (18) pour le prélèvement des gaz d'échappement provenant du flux de gaz d'échappement du moteur à combustion interne (1) en aval du catalyseur de gaz d'échappement (8) et pour le recyclage des gaz d'échappement prélevés dans une ligne d'aspiration (5) placée en amont du moteur à combustion interne (1),
   un dispositif de mesure (17) pour la détection de l'augmentation du rendement du moteur à combustion interne (1) provoquée par l'injection test,
   une unité d'exploitation (2) pour déterminer la capacité de fonctionnement du catalyseur de gaz d'échappement (8) en fonction de la quantité de carburant injectée ($m_{Test}$) et de l'augmentation résultante du rendement.

8. Dispositif de contrôle selon la revendication 7,
   **caractérisé en ce qu'**il est prévu un capteur de température (19) relié à l'unité d'exploitation (2) pour mesurer la température du catalyseur de gaz d'échappement (8) .

9. Dispositif de contrôle selon la revendication 7 et/ou la revendication 8,
   **caractérisé en ce que** le dispositif de mesure comporte un capteur de nombre de tours (2) pour détecter l'augmentation du rendement du moteur à combustion interne (1) .

FIG 1

FIG 2a

Fig. 2a

Testeinspritzung der
Kraftstoffmenge $m_{TEST}$
während des Auslasstakts

Abgasrückführung mit
Rückführrate AGR stromabwärts
nach dem Katalysator

Messung der Kurbelwellenbeschleunigung $a_{TEST}$

Bestimmung des Drehmoments
$M_{TEST}$ aus $a_{TEST}$

Berechnung der Abbaurate des Katalysators
$KR = f(M_{NORMAL}, M_{TEST}, m_{TEST}, m_{NORMAL}, AGR)$

Ende

# FIG 2b

**FIG 3**